Europäisches Patentamt

European Patent Office

Office européen des brevets

(11) Veröffentlichungsnummer: **0 093 928**
A2

# EUROPÄISCHE PATENTANMELDUNG

(21) Anmeldenummer: 83103995.3

(22) Anmeldetag: 23.04.83

(51) Int. Cl.³: **F 16 C 33/30**, F 16 C 43/04

(30) Priorität: 28.04.82 DE 3215758

(43) Veröffentlichungstag der Anmeldung: 16.11.83
Patentblatt 83/46

(84) Benannte Vertragsstaaten: **BE CH FR GB IT LI SE**

(71) Anmelder: STEINEL NORMALIEN GmbH,
Winkelstrasse 7, D-7730 VS-Schwenningen (DE)

(72) Erfinder: Piwak, Herbert, Hessenstrasse 7,
D-7735 Dauchingen (DE)

(74) Vertreter: Patentanwälte, Dipl.-Ing. Klaus Westphal Dr.
rer. nat. Bernd Mussgnug Dr. rer. nat. Otto Buchner,
Seb.-Kneipp-Strasse 14, D-7730 Villingen-Schwenningen
(DE)

(54) Vorrichtung zur Lagesicherung eines Wälzkörperkäfigs.

(57) Um das Herausfallen von Kugel- oder Rollenkäfigen beim Auseinanderfahren von gegeneinander bewegten Maschinenteilen zu verhindern, werden mindestens zwei Reibungskörper in je eine der zur Aufnahme der Kugeln oder Rollen, vorgesehenen Ausnehmungen des Käfigs fest eingesetzt. Die Reibungskörper stehen im unbelasteten Zustand über beide entgegengesetzten Flächen des Käfigs mindestens so weit vor wie die Wälzkörper. So ist es möglich, beim Auseinanderfahren den Käfig entweder auf der innerhalb des Käfigs angeordneten Führungssäule oder in der außerhalb des Käfigs angeordneten Führungsbuchse unverlierbar festzulegen.

Dipl. Ing. Klaus Westphal
Dr. rer. nat. Bernd Mussgnug

Dr. rer. nat. Otto Buchner

PATENTANWÄLTE

Seb.-Kneipp-Strasse 14

D-7730 VS-VILLINGEN

Flossmannstrasse 30 a

D-8000 MÜNCHEN 60

Telefon 07721 - 5 53 43
Telegr. Westbuch Villingen
Telex 5213177 webu d

Telefon 089 - 83 24 46
Telegr. Westbuch München
Telex 5213177 webu d

0093928

- 1 -

U.Z.: 456.43

STEINEL NORMALIEN GmbH

Winkelstr. 7

7730 VS-Schwenningen

## VORRICHTUNG ZUR LAGESICHERUNG EINES WÄLZ-KÖRPERKÄFIGS

Die Erfindung betrifft eine Vorrichtung zur Lagesicherung eines hohlkörperförmigen Wälzkörperkäfigs mit wenigstens einem in einer Ausnehmung des Käfigs festgelegten, wenigstens über eine Fläche des Käfigs etwa gleich weit wie die Wälzkörper vorstehenden Reibungskörper.

Wälzkörperkäfige, insbesondere Kugel- und Rollenkäfige, werden als Präzisionsführungen zweier gegeneinander bewegter Teile im Werkzeug-, Vorrichtungs-, Maschinen-, Meßgeräte-, Apparate- und Fahrzeugbau eingesetzt. Häufig werden z.B. Kugel- oder Rollenkäfige mit kreisförmigem

Postscheckkonto: Karlsruhe 76979-754   Bankkonto: Deutsche Bank AG Villingen (BLZ 69470039) 146332

Querschnitt zwischen eine Führungssäule und eine die Führungssäule umgebende Führungsbuchse eingesetzt. Die Wälzkörper sind dabei im Käfig radial lose gehalten und rollen sich kraftschlüssig unter Vorspannung zwischen Führungssäule und Führungsbuchse ab. Dadurch ergibt sich eine spielfreie, leichtgängige und genaue Führung .

Die Wälzkörperkäfige sind nur über die beim Einsetzen erzeugte Vorspannung der Wälzkörper kraftschlüssig mit den anliegenden Führungsteilen verbunden. Beim Auseinanderfahren der Führung würden die Käfige herausfallen, wenn nicht besondere Vorkehrungen getroffen sind, ein Herausfallen zu verhindern. Dies ist besonders beim senkrechten Einbau eines solchen Käfigs sehr hinderlich. Beispielsweise ist bei Stanzwerkzeugen das Zusammenfahren der Führungsteile nicht nur bei der Montage, sondern auch nach jedem Nachschleifen der aktiven Werkzeugteile notwendig. Beim Absenken des Werkzeugoberteils müssen dabei je nach Anzahl der vorhandenen Führungssäulen z.B. zwei oder vier Wälzkörperkäfige auf der erforderlichen gleichen Höhe gehalten werden. Dies bedeutet, daß mehrere Personen zur Montage erforderlich sind, für die überdies eine Unfallgefahr besteht.

Aus der DE-GmS 74 20 863 ist daher eine Vorrichtung der eingangs genannten Art bekannt, bei der der Käfig nahe einem axialen Ende eine um den Umfang verlaufende Innennut aufweist, in die ein im Querschnitt rechteckförmiger Bremsring eingesetzt ist, der aus einem Kunststoff besteht und an dem vom Käfig umgebenen inneren Führungsteil, beispielsweise einer Führungssäule, anliegt. Dieser Bremsring wirkt als Fallsicherung für den Käfig beim Auseinanderfahren der Führungsteile. Seine Anwendung ist jedoch begrenzt, da er stets am axialen Ende des Käfigs angebracht werden muß und nur an der inneren Führungssäule bremsend angreift. Der bekannte Käfig kann daher nur auf einer Führungssäule, nicht dagegen in der umgebenden Führungsbuchse gegen Herausfallen gesichert werden. Er kann außerdem nicht auf eine bestimmte, beim jeweiligen Anwendungsfall erwünschte Höhe eingestellt werden. Bei Abnutzung ist der Bremsring schwer auszuwechseln. Bei der Herstellung ist ein besonderer Arbeitsgang mit besonderem Einstich zum Erzeugen der Innennut am Käfig und sodann Einpressen des Bremsrings in die Innennut erforderlich.

Durch die Erfindung soll diese bekannte Vorrichtung so verbessert werden, daß sie eine Lagesicherung für den Wälzkörperkäfig in jeder gewünschten Höhe sowohl an einem inneren als auch einem äußeren Führungsteil, z.B. an einer Führungssäule oder Führungsbuchse, ergibt, wobei die Vorrichtung ohne zusätzliche Nacharbeit am Wälzkörperkäfig einfach anzubringen und zu Wartungszwecken auszuwechseln sein soll.

Diese Aufgabe wird erfindungsgemäß dadurch gelöst, daß mindestens zwei Reibungskörper in je eine der zur Aufnahme der Wälzkörper vorgesehenen Ausnehmungen des Käfigs fest eingesetzt sind, wobei die Reibungskörper im unbelasteten Zustand über beide entgegengesetzten Flächen des Käfigs mindestens so weit wie die Wälzkörper vorstehen.

Dadurch kann der Wälzkörperkäfig an beliebiger Stelle auf einer Führungssäule oder in einer Führungsbuchse positioniert werden. Auch bei Verwendung von vier Führungssäulen und senkrechter Einbaulage können die Wälzkörperführungen ohne fremde Hilfe leicht eingefahren werden. Dadurch ergibt sich eine enorme Montageerleichterung und die bei den bekannten Vorrichtungen auftretende Unfallgefahr ist behoben. Für die Herstellung der erfindungsgemäßen Vorrichtung sind normale Käfige, beispielsweise Kugel- oder Rollenkäfige, verwendbar. Eine zusätzliche Nacharbeit am Käfig ist nicht erforderlich. Die Reibungskörper können an beliebiger Stelle in Ausnehmungen des Käfigs eingesetzt werden, sie müssen also nicht am Ende des Käfigs liegen. Dadurch kann eine beliebige Position des Käfigs in den Führungsteilen gewählt werden. Die Reibungskörper können leicht in die Ausnehmungen eingepreßt und bei Verschleiß ausgewechselt werden. Wegen ihres beiderseitigen Vorstehens wirken sie sowohl auf die innere Führungssäule als auch auf die äußere Führungsbuchse. Die Käfige können daher beim Auseinanderfahren wahlweise entweder in der Führungsbuchse oder auf der Führungssäule in beliebiger Höhe gegen das Herunterfallen gesichert werden.

Vorzugsweise sind mehrere Reibungskörper in etwa auf einer Umfangslinie des Käfigs angeordneten, zur Aufnahme der Wälzkörper vorgesehenen Ausnehmungen fest eingesetzt, wobei wenigstens zwei dieser Ausnehmungen am Käfig einander gegenüberliegen. Diese Umfangslinie kann dabei nahe einem axialen Ende des Käfigs verlaufen, was in vielen Fällen zweckmäßig ist. In bestimmten Fällen können die Reibungskörper aber auch an anderen beliebigen Stellen des Käfigs eingesetzt werden.

Die Reibungskörper bestehen vorzugsweise aus einem hartelastischen Kunststoff und sichern sich nach dem Einpressen in die Ausnehmungen selbst gegen Herausfallen. Zweckmäßigerweise sitzen sie mit Preßsitz in den Ausnehmungen.

Bei einer vorteilhaften Ausgestaltung für Kugelkäfige sind die Reibungskörper rotationssymmetrisch, wobei ihr Durchmesser an den über die Ausnehmungen vorstehenden Enden etwas größer und im übrigen kleiner ist als der lichte Durchmesser der Ausnehmungen. Dadurch sichern sie sich an beiden Enden durch Eigenfederung gegen Herausfallen aus den Ausnehmungen. Andererseits können sie durch Herauspressen und Einsetzen eines neuen Reibungskörpers leicht ersetzt werden, so daß die Wartung außerordentlich einfach wird. Bei der Anwendung auf Rollenkäfige sind die Reibungskörper im Querschnitt entsprechend rechteckig.

Um das Einsetzen weiter zu erleichtern, können die Reibungskörper in vorteilhafter Weiterbildung einen sie axial durchsetzenden Hohlraum enthalten. Dieser Hohlraum besitzt vor allem bei rotationssymmetrischen Reibungskörpern vorzugsweise zylindrischen Querschnitt. Sein Durchmesser liegt zweckmäßigerweise in der Größenordnung des halben lichten Durchmessers der Ausnehmungen. Mittels dieses Hohlraums ist es möglich, die Reibungskörper durch einen in den Hohlraum gesteckten Hilfsdorn in die Ausnehmungen einzusetzen. Außerdem wird die radiale Elastizität der Reibungskörper durch den Hohlraum erhöht.

Anhand der Figuren wird ein Ausführungsbeispiel der Erfindung näher erläutert. Es zeigt:

Fig. 1    einen schematischen Vertikalschnitt durch Führungssäule, Führungsbuchse und Kugelkäfig einer Maschinenführung im auseinandergefahrenen Zustand,

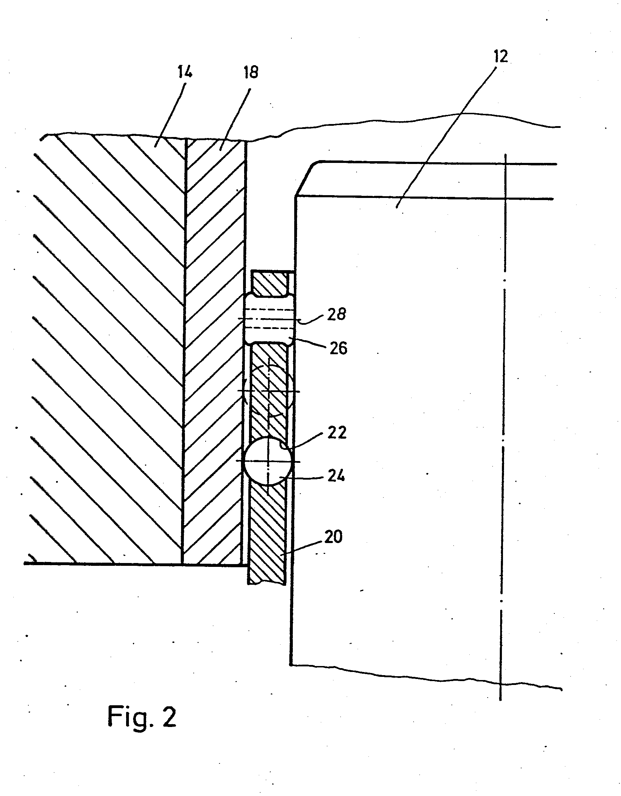

Fig. 2    einen vergrößerten Ausschnitt der in Fig. 1 gezeigten Anordnung in teilweise zusammengefahrenem Zustand und

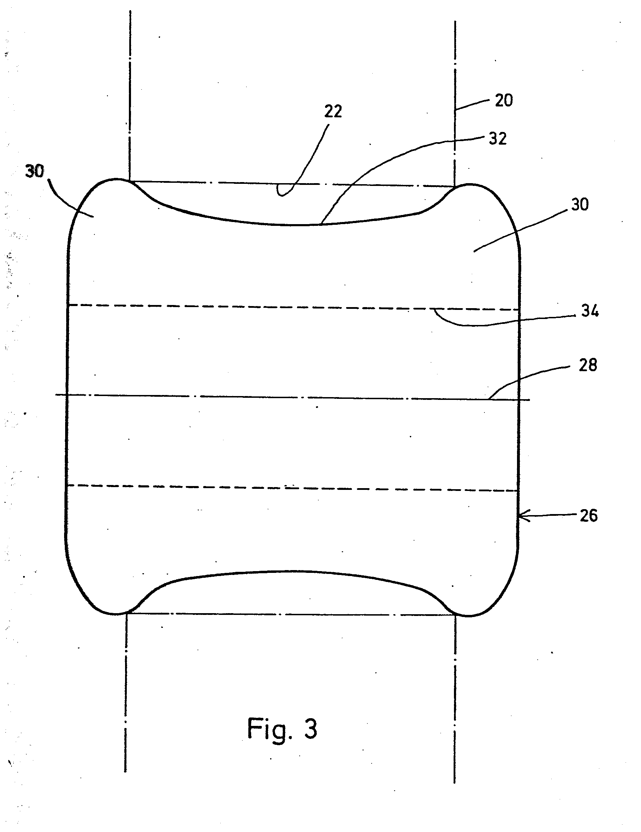

Fig. 3    eine gegenüber Fig. 2 abermals vergrößerte Seitenansicht eines in eine Ausnehmung eingesetzten Reibungskörpers.

In einem Maschinenunterteil 10 ist eine vertikale Führungssäule 12 verankert. In eine Ausnehmung 16 eines Maschinenoberteils 14 ist eine Führungsbuchse 18 eingesetzt, welche im zusammengefahrenen Zustand der Maschine die Führungssäule 12 umgibt. Zwischen Führungssäule 12 und Führungsbuchse 18 ist ein hohlzylindrischer Kugelkäfig 20 eingesetzt, in dessen Ausnehmungen 22 Kugeln 24 eingesetzt sind, die unter Vorspannung zwischen der Außenfläche der Führungssäule 12 und der Innenfläche der Führungsbuchse 18 zur Anlage kommen.

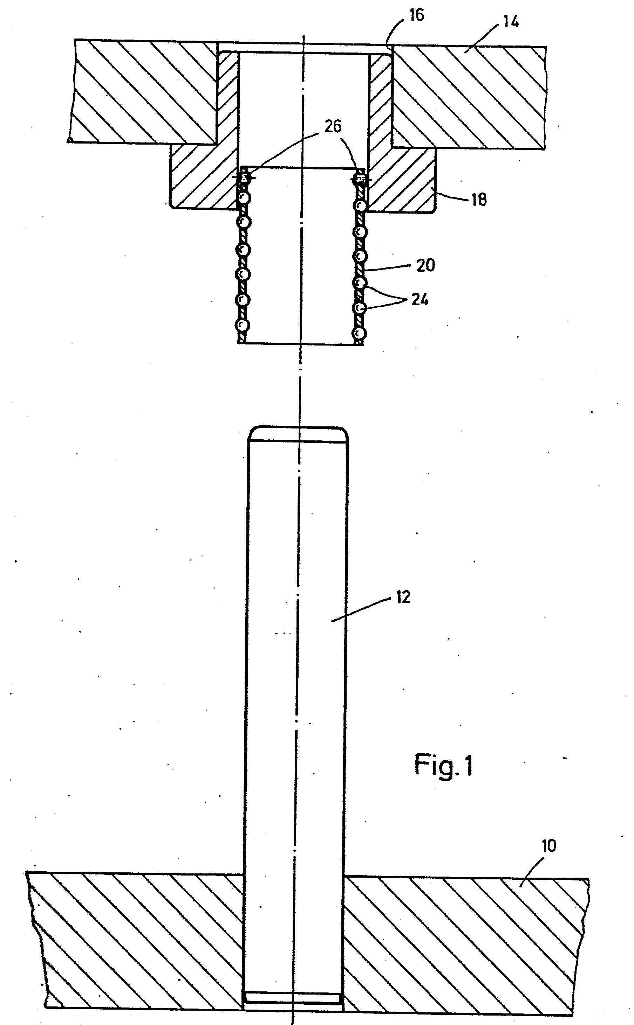

Bei der dargestellten Ausführungsform sind nahe dem oberen axialen Ende des Kugelkäfigs 20, der in Fig. 1 schematisch unter Weglassung der in Aufsicht zu sehenden Ausnehmungen dargestellt ist, rings um den Umfang des Käfigs 20 in mehrere Ausnehmungen 22 statt einer Kugel 24 aus Kunststoff bestehende Reibungskörper 26 eingesetzt, deren Enden zu beiden Seiten über die Außenfläche bzw. Innenfläche des Kugelkäfigs 20 im unbelasteten Zustand mindestens so weit wie die Kugeln 24 vorstehen.

Jeder Reibungskörper 26 ist rotationssymmetrisch um seine senkrecht zu den Flächen des Kugelkäfigs 20 verlaufende Achse 28. In seinen über die Innen- bzw. Außenfläche des Käfigs 20 vorstehenden Teilen 30 weist jeder Reibungskörper einen etwas größeren Durchmesser auf als die zugehörige Ausnehmung 22, während der Durchmesser in den übrigen Teilen 32 etwas geringer ist. Dadurch erfolgt eine elastische Selbsthalterung des Reibungskörpers 26 in der Ausnehmung 22 und sowohl das Einsetzen als auch das Auswechseln ist verhältnismäßig einfach. Parallel zu seiner Achse 28 weist der Reibungskörper 26 einen durchgehenden Hohlraum 34 auf, dessen Durchmesser der Hälfte des Durchmessers der Ausnehmung 22 nahe kommt. In den Hohlraum 34 kann beim Einsetzen des Reibungskörpers 26 ein nicht dargestellter Hilfsdorn eingesetzt werden, wodurch die Montage wesentlich erleichtert wird.

93

Dipl. Ing. Klaus Westphal

Dr. rer. nat. Bernd Mussgnug

Dr. rer. nat. Otto Buchner

PATENTANWÄLTE

Seb.-Kneipp-Strasse 14

D-7730 VS-VILLINGEN

Flossmannstrasse 30 a

D-8000 MÜNCHEN 60

Telefon 07721 - 55343
Telegr. Westbuch Villingen
Telex 5213177 webu d

Telefon 089 - 832446
Telegr. Westbuch München
Telex 5213177 webu d

U.Z.: 456.43

PATENTANSPRÜCHE

1. Vorrichtung zur Lagesicherung eines hohlkörperförmigen
Wälzkörperkäfigs mit wenigstens einem in einer Ausnehmung
des Käfigs festgelegten, wenigstens über eine Fläche des
Käfigs etwa gleich weit wie die Wälzkörper vorstehenden
Reibungskörper, dadurch gekennzeichnet, daß mindestens
zwei Reibungskörper (26) in je eine der zur Aufnahme der
Wälzkörper (24) vorgesehenen Ausnehmungen (22) des
Käfigs (20) fest eingesetzt sind, wobei die Reibungskörper (26) im unbelasteten Zustand über beide entgegengesetzten Flächen des Käfigs (20) mindestens so
weit wie die Wälzkörper (24) vorstehen.

2. Vorrichtung nach Anspruch 1, dadurch gekennzeichnet,
daß mehrere Reibungskörper (26) in etwa auf einer Umfangslinie des Käfigs (20) angeordneten, zur Aufnahme
der Wälzkörper (24) vorgesehenen Ausnehmungen (22)
fest eingesetzt sind, wobei wenigstens zwei dieser Ausnehmungen (22) am Käfig (20) einander gegenüberliegen.

3. Vorrichtung nach Anspruch 2, dadurch gekennzeichnet, daß die Umfangslinie nahe einem axialen Ende des Käfigs (20) verläuft.

4. Vorrichtung nach einem der vorangehenden Ansprüche, dadurch gekennzeichnet, daß die Reibungskörper (26) aus Kunststoff bestehen.

5. Vorrichtung nach einem der vorangehenden Ansprüche, dadurch gekennzeichnet, daß die Reibungskörper (26) mit Preßsitz in den Ausnehmungen (22) sitzen.

6. Vorrichtung nach einem der vorangehenden Ansprüche, dadurch gekennzeichnet, daß die Reibungskörper (26) rotationssymmetrisch sind, wobei ihr Durchmesser an den über die Ausnehmungen (22) vorstehenden Enden (30) etwas größer und im übrigen (32) kleiner ist als der lichte Durchmesser der Ausnehmungen (22).

7. Vorrichtung nach Anspruch 6, dadurch gekennzeichnet, daß die Reibungskörper (26) einen sie axial durchsetzenden Hohlraum (34) enthalten.

8. Vorrichtung nach Anspruch 7, dadurch gekennzeichnet, daß der Hohlraum (34) zylindrischen Querschnitt besitzt.

9. Vorrichtung nach Anspruch 8, dadurch gekennzeichnet, daß der Durchmesser des Hohlraums (34) in der Größenordnung des halben lichten Durchmessers der Ausnehmungen (22) liegt.

0093928

Fig.1

Fig. 2

Fig. 3